# FASCICULE DE BREVET EUROPEEN

(11) **EP 2 780 411 B1**
(45) Date de publication et mention de la délivrance du brevet: **29.03.2017**
(21) Numéro de dépôt: 12781356.6
(22) Date de dépôt: 09.11.2012
(51) Int. Cl.: C08K 5/435, C08L 77/06

(54) **ARTICLES POLYAMIDES PRODUITS PAR EXTRUSION DE PROFILE CYLINDRIQUE CREUX**
DURCH EXTRUDIEREN EINES HOHLZYLINDRISCHEN PROFILS HERGESTELLTE POLYAMIDARTIKEL
POLYAMIDE ARTICLES PRODUCED BY EXTRUDING A HOLLOW CYLINDRICAL PROFILE

(30) Priorité: 18.11.2011 FR 1160523
(43) Date de publication de la demande: 24.09.2014
(73) Titulaire: Rhodia Operations, 93306 Aubervilliers (FR)
(72) Inventeur: SEIGNOBOS, Elodie, F-69230 SAINT GENIS LAVAL (FR)
(74) Mandataire: Benvenuti, Federica
(86) Numéro de dépôt international: PCT/EP2012/072242
(87) Numéro de publication internationale: WO 2013/072252

(56) Documents cités:
- EP-A1- 1 342 754
- EP-A1- 2 479 217
- WO-A2-2006/047775
- WO-A2-2012/024357

## Description

La présente invention concerne des articles polyamides produits par extrusion de profilé cylindrique creux ayant un aspect brillant. Ces articles sont obtenus à partir d'une formulation à base de polyamide de type AA BB, obtenu par polymérisation d'une diamine et d'un diacide carboxylique dont au moins un desdits monomères présente un nombre d'atome de carbone supérieur ou égal à 8, choisi dans le groupe constitué par le polyamide 610, le polyamide 612, le polyamide 1010, le polyamide 106, et le polyamide 1212, et comprenant des agents plastifiants spécifiques de type sulfonamide et comprenant de 5 à 30 % en poids d'un agent modificateur de choc.

### ART ANTERIEUR

Les polyamides techniques sont utilisés pour la réalisation de nombreux articles dans différents domaines, comme le domaine de l'automobile, où des propriétés spécifiques de rigidité, de résistance aux chocs, de stabilité dimensionnelle, en particulier à températures relativement élevées, d'aspect de surface, de densité et de poids sont particulièrement recherchées. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en terme de performance et/ou de coûts.

Il est connu de l'art antérieur d'utiliser des matériaux polyamide pour la fabrication par extrusion d'articles mono- ou multicouches destinés à contenir ou à transporter un fluide tel que par exemple des tubes, conduites ou tuyaux. On utilise notamment divers types de polyamide tels que les polyamide 6, polyamide 11, polyamide 12 ou polyamide 610.

Le polyamide 610 fabriqué en utilisant de l'acide sébacique, un dérivé d'huile de ricin, est un produit d'origine végétale c'est-à-dire non fossile donc bio-sourcé qui permet de garantir un profil éco-efficient dans le produit fini. Toutefois, le polyamide 610 obtenu à partir de matières renouvelables et contenant notamment un agent modificateur du choc ne présente pas l'aspect suffisamment brillant en surface lorsqu'il est fabriqué par extrusion tube, contrairement aux autres polyamides.

Il était ainsi nécessaire de mettre au point une formulation polyamide permettant d'obtenir une brillance améliorée et présentant un bon compromis des autres propriétés recherchés dans l'application, tels que des propriétés mécaniques.

Le document EP1342754 divulgue une composition comprenant au moins un polyamide pouvant être un polyamide aliphatique résultant de la condensation d'une diamine aliphatique avant de 6 à 12 atomes de carbone et d'un diacide aliphatique avant de 9 à 12 atomes de carbone, un plastifiant et un élastomère.

### INVENTION

La demanderesse vient de mettre en évidence qu'il était parfaitement possible de réaliser des articles par par extrusion de profilé cylindrique creux en polyamide 610 qui présentent une brillance suffisante en utilisant une formulation comprenant du polyamide 610 et au moins un plastifiant spécifique de type sulfonamide tel que celui décrit ci-après. Il apparait ainsi que ces formulations polyamides présentent des propriétés rhéologiques suffisantes et de bonne propriétés mécaniques. Cette invention s'applique à tous les polyamides de type AA BB, obtenu par polymérisation d'une diamine et d'un diacide carboxylique dont au moins un des monomères, diamine ou diacide, présente un nombre d'atome de carbone supérieur ou égal à 8, choisis dans le groupe constitué par le polyamide 610, le polyamide 612, le polyamide 1010, le polyamide 106, et le polyamide 1212.

La présente invention concerne ainsi un article obtenu par extrusion de profilé cylindrique creux réalisé à partir d'une composition comprenant au moins :
a) un polyamide de type AA BB, obtenu par polymérisation d'une diamine et d'un diacide carboxylique dont au moins un desdits monomères présente un nombre d'atome de carbone supérieur ou égal à 8, choisi dans le groupe constitué par le polyamide 610, le polyamide 612, le polyamide 1010, le polyamide 106, et le polyamide 1212 ;
b) un plastifiant de type sulfonamide de formule (I)

   **Phe-S(=O)₂-NH₂** (I)

   dans laquelle Phe est un groupe phényle qui comprend au moins un noyau benzène éventuellement substitué par au moins un groupement alkyle, comprenant notamment de 1 à 4 atomes de carbone ; et
c) de 5 à 30 % en poids d'agents modifiant la résistance aux chocs, par rapport au poids total de la composition.

La présente invention concerne également une composition susceptible d'être obtenue par mélange d'au moins :
a) un polyamide de type AA BB, obtenu par polymérisation d'une diamine et d'un diacide carboxylique dont au moins un desdits monomères présente un nombre d'atome de carbone supérieur ou égal à 8, choisi dans le groupe constitué par le polyamide 610, le polyamide 612, le polyamide 1010, le polyamide 106, et le polyamide 1212 ;
b) un plastifiant de type sulfonamide de formule (I)

   **Phe-S(=O)₂-NH₂** (I)

   dans laquelle Phe est un groupe phényle qui comprend au moins un noyau benzène éventuellement substitué par au moins un groupement alkyle, comprenant notamment de 1 à 4 atomes de carbone ; et
c) comprenant de 5 à 30 % en poids d'agents modifiant la résistance aux chocs, par rapport au poids total de la composition.

On entend selon l'invention par extrusion de profilé cylindrique creux, ou extrusion tube, le procédé selon lequel la matière plastique est fondue et forcée au travers d'une filière annulaire pour former un tube en continu.

Les articles selon l'invention sont notamment des tubes, conduits, tuyaux ou autres objet creux, toujours plus long que large, destinés à délivrer un fluide. Le fluide peut être un gaz ou un liquide. Comme gaz, on peut citer notamment l'oxygène, le dioxyde de carbone, l'hydrogène, l'hélium, l'azote, les hydrocarbures légers, tels que le méthane, l'éthane, le propane, l'éthylène et le propylène, et la vapeur d'eau. Comme liquides, on peut citer les solvants apolaires, notamment les solvants représentatifs des essences tels que le toluène, l'isooctane et/ou les solvants polaires tels que l'eau et les alcools comme le méthanol ou l'éthanol, les réfrigérants comme l'éthylène glycol et les mélanges de solvants apolaires, de solvants polaires et de solvants apolaires/polaires, comme par exemple les essences alcoolisées tel que les essences de type E10 et E85. Il est à noter que les liquides peuvent présenter des viscosités variables, tels que notamment les liquides de hautes viscosité s'apparentant aux gels ou crèmes.

### a) Polyamides

Les polyamides de type AA BB de l'invention sont bien décrits, notamment dans le Nylon Plastics Handbook de M.I. Kohan ; Hanser, 1995.

Comme diamines présentant un nombre d'atomes de carbone supérieur ou égal à 8 on peut citer les diamines présentant préférentiellement un nombre d'atomes de carbone compris entre 8 et 16 ; et notamment : l'octaméthylène diamine (en C8), la décaméthylène diamine (en C10), la dodécaméthylène diamine (en C12), et la tétradecaméthylène diamine (en C14).

Préférentiellement, la diamine comprend au moins 8 atomes dans la chaine principale constituant ladite diamine et séparant les deux fonctions amines. Comme diacides carboxyliques présentant un nombre d'atomes de carbone supérieur ou égal à 8 on peut citer par exemple les diacides carboxyliques présentant préférentiellement un nombre d'atomes de carbone compris entre 8 et 16 ; et notamment. : l'acide octanedioïque (en C8), l'acide azélaïque (en C9), l'acide sébacique ou l'acide décanedioïque (en C10), l'acide dodécanedioïque (en C12), l'acide tétradécanedioïque (en C12), et l'acide hexadécanedioïque (en C16).

Préférentiellement, le diacide carboxylique comprend au moins 8 atomes dans la chaine principale constituant ledit diacide carboxylique et séparant les deux fonctions acides carboxyliques.

On utilise les polyamides 610, polyamides 612, polyamides 1010, polyamides 106, polyamides 1212, selon la nomenclature utilisée dans l'ouvrage de référence Nylon Plastic Handbook, Hanser, 1995.

On entend notamment par polyamide 610 un polyamide comprenant au moins 80 % en masse de motifs hexaméthylène sebacamide. Ces polyamides peuvent donc parfaitement être des (co)polyamides.

On peut notamment utiliser des polyamides de poids moléculaires variables par addition avant ou pendant la polymérisation des monomères de polyamide, ou encore en voie fondue à l'extrusion, de monomères modifiant la longueur des chaînes, tel que notamment des composés difonctionnels et/ou monofonctionnels présentent des fonctions amines ou acides carboxyliques, ou anhydride ou epoxy capables de réagir avec les monomères du polyamide ou le polyamide.

Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

On peut utiliser au début, en cours ou en fin de polymérisation tout type d'acides mono- ou di-carboxylique, aliphatiques ou aromatiques ou tout types d'amines mono- ou di-amines, aliphatiques ou aromatiques.

Des polyamides selon l'invention peuvent aussi être obtenus par mélange, notamment en fondu. On peut par exemple mélanger un polyamide avec un autre polyamide, ou un polyamide avec un oligomère de polyamide, ou encore un polyamide avec des monomères modifiant la longueur des chaînes, tel que notamment des diamines, diacides carboxyliques, monoamines et/ou monoacides carboxyliques. On peut notamment ajouter au polyamide de l'acide isophtalique, de l'acide téréphtalique ou de l'acide benzoïque, par exemple à des teneurs d'environ 0,2 à 2 % en poids.

La composition de l'invention peut également comprendre les copolyamides dérivés notamment des polyamides ci-dessus, ou les mélanges de ces polyamides ou (co)polyamides.

La composition selon l'invention peut comprendre de 20 à 90 % en poids, préférentiellement de 20 à 80 % en poids de polyamide, par rapport au poids total de la composition.

La composition peut comprendre, outre le polyamide de l'invention, un ou plusieurs autres polymères, de préférence polyamides ou copolyamides. La composition peut également comprendre, selon la propriété finale souhaitée, un mélange de polyamide modifié selon l'invention et un ou plusieurs autres polymères, tel que par exemple du polyamide, du polyester, des polyoléfines, du polystyrène, de la résine ABS, du polycarbonate, du sulfure de polyphénylène (PPS), de éther de polyphénylène (PPE), du polyacétal, du polysulfone, de la polyéthersulfone, du polyétherimide, de la polyéthercétone, une résine d'acide polylactique, une résine de polysulfone, une résine élastomère ou des mélanges de ceux-ci.

### b) Plastifiant

Le plastifiant de formule (I) présente préférentiellement un groupement alkyl en ortho, méta ou para sur le benzène, par rapport à la fonction sulfonamide. On préfère notamment un plastifiant de formule (I) présentant un méthyle en para.

On préfère notamment les plastifiants de formule (I) choisis dans le groupe constitué par : le p-toluène sulfonamide, l'o-toluène sulfonamide, et le mélange o-toluène sulfonamide et p-toluène sulfonamide, pour toutes les proportions.

La composition selon l'invention peut comprendre de 2 à 25 % en poids, préférentiellement de 5 à 20 % en poids de plastifiant de formule (I), par rapport au poids total de la composition.

### c) Agent modificateur du choc.

Les agents modifiants la résistance aux chocs selon l'invention peuvent être des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé, et les ionomères.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées.

La composition comprend de 5 à 30 % en poids, préférentiellement de 10 à 25 % en poids d'agents modifiants la résistance aux chocs, par rapport au poids total de la composition.

### Autres charges et/ou additifs

La composition peut comprendre des charges de renfort ou de remplissages, tels que par exemple des charges fibreuse et/ou non fibreuses.

On peut notamment citer les charges fibreuses de renfort, telles que les fibres de verre, les fibres de carbone, ou des fibres organiques. Par exemple, on peut mentionner les nano-fibres et nano-tubes, tel que les nano-tubes de carbone. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

La concentration pondérale des charges de renfort ou de remplissage peut varier de 1 % à 60 % en poids par rapport au poids total de la composition, de préférence de 15 à 50 %.

La composition selon l'invention peut en outre comprendre des additifs classiquement utilisés pour la fabrication de compositions polyamides. Ainsi, on peut citer les lubrifiants, les agents ignifugeants, les plastifiants, les agents nucléants, les catalyseurs, les stabilisants lumière et/ou thermique, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange en fondu.

Les matériaux et compositions de l'invention sont généralement obtenus par mélange des différents constituants à chaud, par exemple dans une extrudeuse mono ou bivis, à une température suffisante pour maintenir la résine polyamide en milieu fondu ; ou à froid dans un mélangeur mécanique notamment. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange à chaud ou à froid avec la matrice plastique. L'addition des composés et des additifs peut être réalisée par ajout de ces composés dans la matrice plastique fondue sous forme pure ou sous forme de mélange concentré dans une matrice telle que par exemple une matrice plastique.

L'extrusion de profilé cylindrique creux est notamment décrit dans le livre Matières Plastiques II. Technologie Plasturgie, Technique & Documentation, 1982, Jean Bost, pages 89-103. Selon ce procédé, la matière plastique est fondue et forcée au travers d'au moins une filière annulaire pour former un cylindre creux en continu aux dimensions déterminées. En sortie de filière un système de tirage peut amener le cylindre extrudé vers une coupeuse. Le refroidissement peut être effectué par calibrage, notamment calibrage sous pression ou sous vide. Il est possible de produire des articles d'articles mono- ou multicouches destinés à contenir ou à transporter un fluide tel que par exemple des tubes, conduites ou tuyaux.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Les composés utilisés sont les suivants :
- Polyamide 6 ayant un IV de 220 ml/g (déterminé dans l'acide formique à 90% selon la norme ISO 307)
- Polyamide 610 ayant un IV de 220 ml/g (déterminé dans l'acide formique à 90% selon la norme ISO 307)
- Modificateurs de choc: Exxelor® VA1801 (copolymères oléfinique greffé anhydride maléique)
- BBSA : N-Butyl benzene sulfonamide (CAS : 3622-84-2), de la société Proviron
- PTSA : P-toluène sulfonamide (CAS : 70-55-3), de la société Axcentive
- Additifs : cire et stabilisant thermique.

Avant extrusion, les polyamides sont séchés à une teneur en eau inférieure à leur teneur en eau à l'équilibre. Des formulations sont réalisées par mélange des différents composants et additifs en voie fondu dans une extrudeuse bi-vis co-rotative WERNER&PFLEIDERER ZSK 40 avec dégazage (L/D=36), fonctionnant à 30 - 40 kg/h et à une vitesse de 270 trs/min. Les températures d'extrusion avec un profil croissant sont de 235-255°C. Le couple moteur et la puissance de moteur absorbée varient selon les polyamides. Tous les composants de la formulation sont introduits au début de l'extrudeuse, sauf le PSTA ou BBSA qui est introduit au milieu de l'extrudeuse.

Des tubes de dimensions suivantes : 8mm de diamètre externe et 6mm de diamètre interne sont produits par extrusion tube sur extrudeuse GIMAC équipée d'un conformateur annulaire de diamètre externe 8mm.

Les compositions des formulations sont regroupées dans le tableau 1 suivant.

**Tableau 1**

| **EXAMPLES** | **Ex 1** | **C2** | **C3** | **C4** | **C5** |
|---|---|---|---|---|---|
| PA 6 (%) | - | - | 76,2 | 76,2 | - |
| PA 610 (%) | 76,2 | 76,2 | - | - | 76,2 |
| BBSA (%) | - | 8 | - | 8 | - |
| PTSA (%) | 8 | - | 8 | - | - |
| Elastomère (%) | 15 | 15 | 15 | 15 | 15 |
| Additifs (%) | 0,8 | 0,8 | 0,8 | 0,8 | 0,8 |
| | | | | | |
| Brillance Tube (%) | 45,1 | 34,4 | 65,9 | 68,4 | 39,4 |
| Choc Charpy entaillé à 23°C (KJ/m²) - ISO 179-1/1eA | 67 | - | 40 | - | - |
| Module de Tension (MPa) - ISO 527/1A | 1240 | 790 | 1390 | 1030 | 1660 |

Les % sont exprimés en poids, par rapport au poids total de la composition.

L'analyse de la brillance des tubes est effectuée selon une procédure suivante : On mesure la brillance à l'aide d'un brillancemètre (modèle micro-gloss de la société BYK-Gardner) sur 9 tubes et on présente la moyenne de ces mesures.

L'angle de réflexion choisi est 85°. La valeur est exprimée en pourcentage de l'intensité du rayon réfléchi par rapport à l'intensité du rayon incident.

Il apparait ainsi que l'utilisation d'une composition selon la présente invention permet la fabrication d'un tube polyamide à base de PA 610 brillant présentant un excellent compromis de propriétés mécaniques.

## Revendications

1. Composition susceptible d'être obtenue par mélange d'au moins :
a) un polyamide de type AA BB, obtenu par polymérisation d'une diamine et d'un diacide carboxylique dont au moins un desdits monomères présente un nombre d'atome de carbone supérieur ou égal à 8, choisi dans le groupe constitué par le polyamide 610, le polyamide 612, le polyamide 1010, le polyamide 106, et le polyamide 1212 ;
b) un plastifiant de type sulfonamide de formule (I)
**Phe-S(=O)₂-NH₂** (I)
dans laquelle Phe est un groupe phényle qui comprend au moins un noyau benzène éventuellement substitué par au moins un groupement alkyle, et
c) comprenant de 5 à 30 % en poids d'agents modifiant la résistance aux chocs, par rapport au poids total de la composition.

2. Composition selon la revendication 1, **caractérisée en ce qu'**elle comprend de 20 à 90 % en poids de polyamide, par rapport au poids total de la composition.

3. Composition selon la revendication 1 ou 2, **caractérisée en ce que** le plastifiant de formule (I) présente un groupement alkyl en ortho, méta ou para sur le benzène, par rapport à la fonction sulfonamide.

4. Composition selon l'une quelconque des revendications 1 à 3, **caractérisée en ce que** le plastifiant de formule (I) est choisi dans le groupe constitué par : le p-toluène sulfonamide, l'o-toluène sulfonamide, et le mélange o-toluène sulfonamide et p-toluène sulfonamide.

5. Composition selon l'une quelconque des revendications 1 à 4, **caractérisée en ce qu'**elle comprend de 2 à 25 % en poids de plastifiant de formule (I), par rapport au poids total de la composition.

6. Article obtenu par extrusion de profilé cylindrique creux réalisé à partir d'une composition comprenant au moins :
a) un polyamide de type AA BB, obtenu par polymérisation d'une diamine et d'un diacide carboxylique dont au moins un desdits monomères présente un nombre d'atome de carbone supérieur ou égal à 8, choisi dans le groupe constitué par le polyamide 610, le polyamide 612, le polyamide 1010, le polyamide 106, et le polyamide 1212 ;
b) un plastifiant de type sulfonamide, de formule (I)
**Phe-S(=O)₂-NH₂** (I)
dans laquelle Phe est un groupe phényle qui comprend au moins un noyau benzène éventuellement substitué par au moins un groupement alkyle, et
c) de 5 à 30 % en poids d'agents modifiant la résistance aux chocs, par rapport au poids total de la composition.

## Patentansprüche

1. Zusammensetzung, die durch Mischen von mindestens Folgendem erhalten werden kann:
a) einem Polyamid des AABB-Typs, das durch Polymerisation eines Diamins und einer Dicarbonsäure erhalten wird, wovon mindestens eines der Monomere eine Anzahl an Kohlenstoffatomen aufweist, die größer oder gleich 8 ist, das aus der Gruppe ausgewählt ist, die aus Polyamid 610, Polyamid 612, Polyamid 1010, Polyamid 106 und Polyamid 1212 besteht;
b) einem Sulfonamid-Weichmacher der Formel (I)
**Phe-S(=O)₂-NH₂** (I)
wobei Phe eine Phenylgruppe ist, die mindestens einen Benzolring umfasst, der gegebenenfalls durch mindestens eine Alkylgruppe substituiert ist,
und
c) umfassend von 5 bis 30 Gew.% eines Schlagzähmodifikators bezogen auf das Gesamtgewicht der Zusammensetzung.

2. Zusammensetzung nach Anspruch 1, **dadurch gekennzeichnet, dass** sie 20 bis 90 Gew.% Polyamid bezogen auf das Gesamtgewicht der Zusammensetzung umfasst.

3. Zusammensetzung nach Anspruch 1 oder 2, **dadurch gekennzeichnet, dass** der Weichmacher der Formel (I) eine Alkylgruppe in ortho-, meta- oder para-Stellung auf Benzol in Bezug auf die Sulfonamidfunktion aufweist.

4. Zusammensetzung nach einem der Ansprüche 1 bis 3, **dadurch gekennzeichnet, dass** der Weichmacher der Formel (I) aus der Gruppe ausgewählt ist, die aus Folgendem besteht: p-Toluolsulfonamid, o-Toluolsulfonamid und der Mischung aus o-Toluolsulfonamid und p-Toluolsulfonamid.

5. Zusammensetzung nach einem der Ansprüche 1 bis 4, **dadurch gekennzeichnet, dass** sie 2 bis 25 Gew.% Weichmacher der Formel (I) bezogen auf das Gesamtgewicht der Zusammensetzung umfasst.

6. Artikel, der durch Extrudieren eines hohlzylindrischen Profils erhalten wird, der ausgehend von einer Zusammensetzung hergestellt ist, die mindestens Folgendes umfasst:
a) ein Polyamid des AABB-Typs, das durch Polymerisation eines Diamins und einer Dicarbonsäure erhalten wird, wovon mindestens eines der Monomere eine Anzahl an Kohlenstoffatomen aufweist, die größer oder gleich 8 ist, das aus der Gruppe ausgewählt ist, die aus Polyamid 610, Polyamid 612, Polyamid 1010, Polyamid 106 und Polyamid 1212 besteht;
b) einen Sulfonamid-Weichmacher der Formel (I)
**Phe-S(=O)₂-NH₂** (I)
wobei Phe eine Phenylgruppe ist, die mindestens einen Benzolring umfasst, der gegebenenfalls durch mindestens eine Alkylgruppe substituiert ist, und
c) 5 bis 30 Gew.% eines Schlagzähmodifikators bezogen auf das Gesamtgewicht der Zusammensetzung.

## Claims

1. Composition that may be obtained by blending at least:
a) a polyamide of AA BB type, obtained by polymerization of a diamine and of a dicarboxylic acid in which at least one of the said monomers has a number of carbon atoms greater than or equal to 8, chosen from the group consisting of polyamide 610, polyamide 612, polyamide 1010, polyamides 106 and polyamides 1212;
b) a plasticizer of sulfonamide type of formula (I)
**Phe-S(=O)₂-NH₂** (I)
in which Phe is a phenyl group which comprises at least one benzene nucleus optionally substituted with at least one alkyl group, and
c) comprising from 5% to 30% by weight of impact modifiers, relative to the total weight of the composition.

2. Composition according to Claim 1, **characterized in that** it comprises from 20% to 90% by weight of polyamide, relative to the total weight of the composition.

3. Composition according to Claim 1 or 2, **characterized in that** the plasticizer of formula (I) contains an ortho, meta or para alkyl group on the benzene, relative to the sulfonamide function.

4. Composition according to any one of Claims 1 to 3, **characterized in that** the plasticizer of formula (I) is chosen from the group consisting of: p-toluenesulfonamide, o-toluenesulfonamide, and the mixture o-toluenesulfonamide and p-toluenesulfonamide.

5. Composition according to any one of Claims 1 to 4, **characterized in that** it comprises from 2% to 25% by weight of plasticizer of formula (I), relative to the total weight of the composition.

6. Article obtained by extrusion of a hollow cylindrical section prepared from a composition comprising at least:
a) a polyamide of AA BB type, obtained by polymerization of a diamine and of a dicarboxylic acid in which at least one of the said monomers has a number of carbon atoms greater than or equal to 8, chosen from the group consisting of polyamide 610, polyamide 612, polyamide 1010, polyamide 106 and polyamide 1212;
b) a plasticizer of sulfonamide type of formula (I)
**Phe-S(=O)₂- NH₂** (I)
in which Phe is a phenyl group which comprises at least one benzene nucleus optionally substituted with at least one alkyl group, and
c) from 5% to 30% by weight of impact modifiers, relative to the total weight of the composition.
